# EUROPÄISCHE PATENTSCHRIFT

(11) **EP 0 677 835 B1**
(45) Veröffentlichungstag und Bekanntmachung des Hinweises auf die Patenterteilung: **12.07.2000**
(21) Anmeldenummer: 95200872.0
(22) Anmeldetag: 06.04.1995
(51) Int. Cl.: G10L 15/18

(54) **Verfahren zum Ermitteln einer Folge von Wörtern**
Process to ascertain a series of words
Procédé pour rechercher une suite de mots

(30) Priorität: 15.04.1994 DE 4412930
(43) Veröffentlichungstag der Anmeldung: 18.10.1995
(73) Patentinhaber: Philips Corporate Intellectual Property GmbH, 52064 Aachen (DE); Koninklijke Philips Electronics N.V., 5621 BA Eindhoven (NL)
(72) Erfinder: Aubert, Louis Xavier, Dr., D-22335 Hamburg (DE); Ney, Hermann, Dr., D-22335 Hamburg (DE)
(74) Vertreter: Volmer, Georg, Dipl.-Ing.

(56) Entgegenhaltungen:
- EP-A- 0 242 743
- EP-A- 0 299 572
- EP-A- 0 418 711

## Beschreibung

Die Erfindung betrifft ein Verfahren zum Ermitteln einer Folge von Wörtern eines vorgegebenen Vokabulars aus einem Sprachsignal.

Insbesondere betrifft die Erfindung die automatische Erkennung eines natürlich gesprochenen Sprachsignals aus einem oder mehreren Sätzen, wobei die einzelnen Wörter im Sprachsignal also nicht durch Pausen getrennt sind, sondern die Wortgrenzen bei der automatischen Erkennung selbsttätig ermittelt werden müssen.

Für eine automatische Erkennung wird das Sprachsignal in eine zeitliche Folge von Testsignalen umgewandelt, die nach der Methode der dynamischen Programmierung mit Folgen von Referenzsignalen verglichen werden, die jeweils ein Wort darstellen. Durch diese Referenzsignale wird das Vokabular bestimmt. Ein günstiger Aufbau der Referenzsignale des Vokabulars ist in Form eines Baums, bei dem die Teilfolgen von Referenzsignalen, die Wortteile darstellen, die mehreren Wörtern gemeinsam sind, nur einmal vorkommen, nämlich in einem Zweig des Vokabularbaums, der mehreren Wörtern gemeinsam ist. Insbesondere in diesem Falle entsteht jedoch das Problem, daß es sehr schwierig ist, ein Sprachmodell höherer Ordnung, d.h. ein n-Gram Sprachmodell mit n>1, zu berücksichtigen.

Bei der Spracherkennung nach der Methode der dynamischen Programmierung ergibt sich für jedes Wort des Vokabulars zu einer Folge von Testsignalen eine Folge von Referenzsignalen mit günstigstem Bewertungswert, die als Hypothese bzw. Hypothese innerhalb eines Wortes bezeichnet wird. Wenn eine solche Hyothese ein Wortende erreicht, werden mit folgenden Testsignale nicht nur Hypothesen innerhalb längerer Wörter, sondern auch mit Wortanfängen, d.h. mit Anfängen von Folgen von Referenzsignalen bzw. mit der Wurzel des Vokabularbaums, fortgesetzt. Dadurch entsteht eine schnell steigende Anzahl von Hypothesen, die dadurch begrenzt wird, daß die Bewertungswerte der einzelnen Hypothesen immer wieder mit einem Schwellenwert verglichen werden, der vorzugsweise um einen bestimmten Betrag über dem optimalen Bewertungswert zu dem betreffenden Zeitpunkt liegt. Um die Anzahl von Hypothesen über Wortfolgen weiter zu verringern, ist es bekannt, von Hypothesen im Wort, die zu verschiedenen Zeitpunkten, d.h. mit verschiedenen, zeitlich benachbarten Testsignalen nach den Enden möglicherweise unterschiedlicher Vorgängerwörter gestartet wurden und die bei demselben Testsignal das Wortende erreichen, nur diejenige Hypothese weiterzuführen, die am Wortende den günstigsten Bewertungswert hat. Damit wird für ein solches Wortende auch nur ein einziges Vorgängerwort behalten.

Aus dem Aufsatz von R. Schwartz und S. Austin "A Comparison of Several Approximate Algorithms For Finding Multiple (N-BEST) Sentence Hypotheses", erschienen in "Proceedings of the ICASS 91, Toronto, Canada", 1991, Seiten 701 bis 704 wird ein Verfahren beschrieben, bei dem alle Hypothesen innerhalb eines Wortes, die also zu verschiedenen Zeitpunkten bzw. mit verschiedenen Testsignalen gestartet wurden, getrennt bis zum Ende dieses Wortes geführt werden, auch wenn diese Hypothesen besonders am Wortende über die gleiche Folge von Referenzsignalen verlaufen, sofern die Bewertungswerte dieser Hypothesen nicht den erwähnten Schwellenwert überschreiten. An jedem Wortende werden die Daten dieser Hypothesen abgespeichert, nämlich die Identität des beendeten Wortes, der momentane Zeitpunkt als Endpunkt, der Startpunkt der Hypothese im Wort und die Identität des dazu gehörigen Vorgängerwortes sowie der in dieser Hypothese erreichte Bewertungswert. Auf diese Weise wird eine Anzahl von unterschiedlichen Wortfolgen gebildet, und am Ende des Satzes werden mehrere Wortfolgen abgeleitet, die am Ende des Satzes die besten Bewertungswerte haben.

Dieses bekannte Verfahren geht aus von der Erkenntnis, daß der optimale Startpunkt eines Wortes von dem Vorgängerwort, jedoch mit großer Wahrscheinlichkeit nicht von weiteren vorhergehenden Wörtern abhängt. Es bietet zwar Möglichkeiten, verschiedene Wortfolgen aus einem gesprochenen Satz abzuleiten, aus denen die zutreffende Folge ausgewählt werden kann, jedoch sind diese Möglichkeiten dennoch begrenzt, so daß es durchaus vorkommen kann, daß die richtige Wortfolge sich nicht unter den ermittelten Wortfolgen befindet. Außerdem wird dabei kein Sprachmodell berücksichtigt.

In EP-A-0299572 ist ein Verfahren zur Erkennung von zusammenhängend gesprochenen Wörtern offenbart. Es wird ein Wortbaum gebildet, wobei jedem Wortende ein Wortergebnis zugeordnet wird, das einen Bewertungswert enthält. Auf der Grundlage eines so gebildeten Wortbaums wird eine Wortfolge ausgewählt, die den kleinsten Bewertungswert aufweist.

Die Erfindung hat zur Aufgabe, bei im wesentlichen gleichem Aufwand wie bei dem bekannten Verfahren wesentlich mehr Möglichkeiten für die Ermittlung und Ausgabe von Wortfolgen zu bieten, wobei auch Sprachmodelle höherer Ordnung sehr leicht berücksichtigt werden können und bei dem auch als Vokabularbaum aufgebaute Folgen von Referenzsignalen günstig verwendet werden können.

Diese Aufgabe wird durch das im Patentanspruch 1 angegebene Verfahren gelöst.

Bei der erfindungsgemäßen Lösung handelt es sich um eine neue Form eines zweistufigen Erkennungsverfahrens. In der ersten Stufe werden auf der akustischen Ebene lediglich Folgen von Wortpaaren gebildet, wobei die Wortgrenzen innerhalb der Wortpaare optimiert sind. In der zweiten Stufe werden auf der Wortebene diese gebildeten Wortpaare als Wortgitter betrachtet, und alle weiteren Maßnahmen wie die Anwendung eines Sprachmodells erfolgen auf dieser Ebene. In dem Wortgitter ist eine Vielzahl von Pfaden möglich, wobei auf jedem Pfad eine andere Wortfolge liegt. Aus den Wortergebnissen für jedes beendete Wort, von denen jedes zu einem Wortpaar aus dem beendeten Wort und einem Vorgängerwort gehört, wobei also dasselbe Wort mit verschiedenen Vorgängerwörtern auftreten kann, kann ein optimales Wortpaar unter Berücksichtigung eines Sprachmodells gebildet werden. Dazu wird der Bewertungswert, der am Ende von jeweils einem Wortpaar erreicht ist, um einen Sprachmodellwert erhöht, der durch dieses Wortpaar aus endendem Wort und Vorgängerwort und gegebenenfalls diesem vorangehenden Vorgängerwörtern bestimmt ist, und es wird nur das Wortpaar mit dem besten Bewertungswert weiter berücksichtigt. Die Bestimmung solcher Wortpaare, d.h. die Bestimmung des optimalen Vorgängerworts zu jedem endenden Wort, erfolgt in dem erwähnten Wortgitter, bei dem der zeitaufwendige akustische Vergleich abgeschlossen ist, und innerhalb des Wortgitters können die Berechnungen wie die Ermittlung der optimalen Vorgängerwörter sehr schnell durchgeführt werden. Aus diesen optimalen Wortpaaren kann durch die Verkettung, bei der ein Vorgängerwort jeweils das endende Wort für das vorhergehende Wortpaar darstellt, wobei die Verkettung in bekannter Weise durch die Angabe des Startpunktes jedes Wortes gebildet wird, eine einzige optimale Wortfolge durch die Verfolgung rückwärts der Startpunktangaben als Rückwärtszeiger ermittelt werden. Dies kann am Ende eines Satzes sein, d.h. der vorgegebene Abschnitt des Sprachsignals ist ein Satz, jedoch kann dies auch zu regelmäßigen Zeitpunkten innerhalb eines Satzes erfolgen. Es hat sich nämlich gezeigt, daß die in der beschriebenen Weise gebildeten bzw. verbleibenden optimalen Hypothesen innerhalb des Wortgitters in Richtung des Satzanfangs fast immer bald auf einen Punkt kommen, der allen diesen Hypothesen gemeinsam ist, so daß die vor diesem Punkt liegende Wortfolge bereits als endgültig ausgegeben werden kann.

Die Tatsache, daß die Berechnungen im Wortgitter sehr schnell durchgeführt werden können, läßt sich auch dahingehend ausnutzen, daß alternative Wörter ausgewählt werden können. Wenn nämlich zu im wesentlichen regelmäßigen Zeitpunkten die bis dahin gebildeten Hypothesen im Wortgitter rückwärts verfolgt werden und damit eine Wortfolge vom Satzanfang beginnend bereits ausgegeben wird, kann beim Feststellen eines falschen Wortes diese gelöscht werden, und die Bestimmung der optimalen Hypothese im Wortgitter erfolgt erneut ohne Berücksichtigung des ausgelöschten Wortes im Wortgitter. Dadurch wird anstelle des gelöschten falschen Wortes zunächst ein anderes Wort ausgegeben, und wenn dies ebenfalls falsch ist, kann es ebenfalls gelöscht und der Vorgang wiederholt werden. Wenn schließlich ein richtiges Wort ausgegeben wird, wird sich die weiter ausgegebene Wortfolge allgemein von der ursprünglichen Wortfolge nach dem falschen Wort unterscheiden, aber gerade dadurch der tatsächlich gesprochenen Wortfolge mit größerer Wahrscheinlichkeit entsprechen.

Die Erfindung hat ferner zur Aufgabe, eine Anordnung zum Ermitteln einer Folge von Wörtern aus einem Sprachsignal anzugeben, die mit einer geringen Fehlerrate bei der Ermittlung arbeitet, indem Sprachmodelle auch höherer Ordnung insbesondere bei als Vokabularbaum aufgebauten Folgen von Referenzsignalen berücksichtigt werden können. Diese Aufgabe wird durch die im Patentanspruch 2 angegebene Anordnung gelöst. Diese erfindungsgemäße Anordnung hat ebenfalls einen zweistufigen Aufbau, wobei in den ersten bis dritten Mitteln Wortpaare gebildet werden, in denen die Wortgrenzen optimiert sind. Der zweite Speicher bildet die Schnittstelle zur zweiten Stufe, in der diese Wortpaare weiter verarbeitet werden. Die zweite Stufe ermöglicht mit wenig Aufwand eine komplexe Verarbeitung der so gebildeten Wortpaare als Wortgitter.

Ausführungsbeispiele der Erfindung werden nachstehend anhand der Zeichnung erläutert. Es zeigen:
**Fig. 1** beispielhaft den Verlauf von zwei Hypothesen über zwei verschiedene Vorgängerwörter,
**Fig. 2** schematisch ein aus den Wortergebnissen gebildetes Wortgitter mit dem Inhalt der Speicherstellen für die einzelnen Wortergebnisse,
**Fig. 3** ein Blockschaltbild einer erfindungsgemäßen Anordnung.

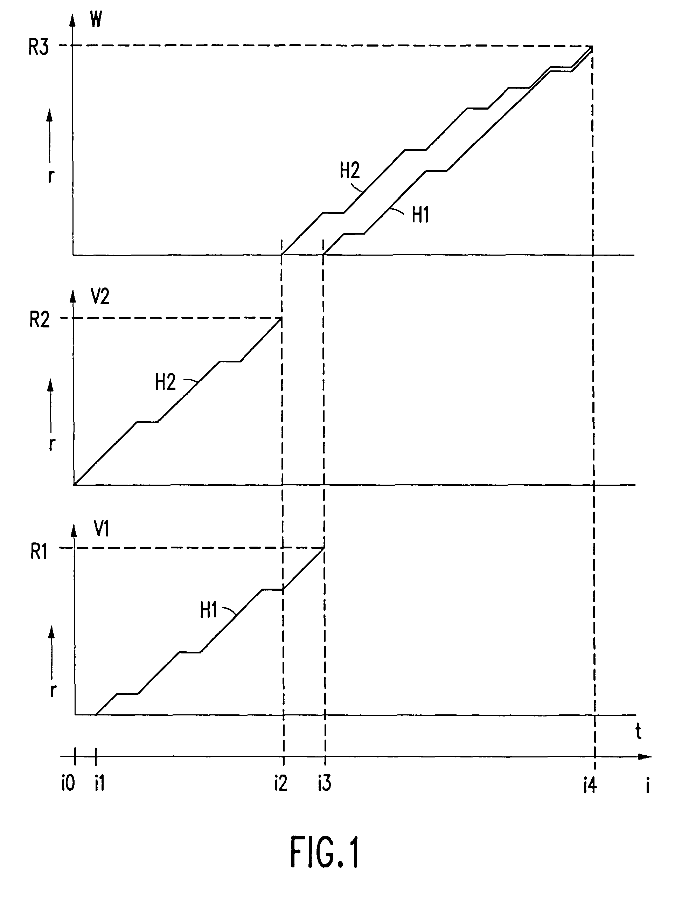

In Fig. 1 ist schematisch der Verlauf von zwei Hypothesen dargestellt, die von zwei verschiedenen Vorgängerwörtern V1 und V2 ausgehen und sich, in diese Beispiel deutlichkeitshalber mit verschiedenen Startpunkten, in einem Wort W fortsetzen, und zwar bis zu demselben Endpunkt. Grundsätzlich können solche Startpunkte aber auch gleichzeitig sein. In der waagerechten Achse ist die Zeit t und damit die Folge von Testsignalen i, die aus dem Sprachsignal abgeleitet wurden, aufgetragen. In der senkrechten Richtung ist für die drei Wörter V1, V2 und W die Folge von Referenzsignalen r angedeutet, wobei R1 das letzte Referenzsignal des Wortes V1, R2 das letzte Referenzsignal des Wortes V2 und R3 das letzte Referenzsignal des Wortes W ist. Die Folge i von Testsignalen wird nun mit Folgen von Referenzsignalen verglichen, und zwar bei dem Beispiel in Fig. 1 beginnend mit dem Referenzsignal i0 mit den Referenzsignalen des Wortes V2 und beginnend mit dem Testsignal i1 mit den Referenzsignalen V1. Durch den Vergleich der Testsignale mit den Referenzsignalen nach der Methode der dynamischen Programmierung, wie in der EP 0 533 260 A1 (PHD 91-138) beschrieben, ergibt sich in dem Wort V1 ein Pfad, der auch als Hypothese H1 innerhalb dieses Wortes bezeichnet werden kann. Entsprechend ergibt der Vergleich dieser Testsignale im Wort V2 einen Pfad, der eine Hypothese H2 darstellt. Es sei bemerkt, daß tatsächlich allgemein noch weitere, früher begonnene bzw. später beginnende Hypothesen in beiden Wörtern vorhanden sind, die hier der Übersichtlichkeit halber jedoch nicht näher betrachtet werden.

Die Hypothese H2 erreicht das letzte Referenzsignal R2, d.h. das Ende des Wortes V2, und mit diesem Wortende wird die Hypothese H2 in verschiedenen Wörtern fortgesetzt, indem die folgenden Testsignale mit den ersten Referenzsignalen dieser Worte verglichen werden, wobei in dem hier betrachteten Fall nur die Fortsetzungen in dem Wort W betrachtet werden, d.h. hier die Fortsetzung der Hypothese H2 in dem Wort W.

In entsprechender Weise verläuft die Hypothese H1 durch den letzten Referenzwert R1 des Wortes V1, d.h. durch das Ende des Wortes V1, und danach werden ebenfalls die darauf folgenden Testsignale mit neuen Wortanfängen verglichen, d.h. in verschiedenen Wörtern fortgesetzt, wobei hier ebenfalls nur die Fortsetzung der Hypothese H1 in dem Wort W betrachtet wird. Bei diesen Fortsetzungen wird automatisch die optimale Lage i2 bzw. i3 der Wortgrenzen zu diesen Wörtern V1 und V2 erhalten.

Die beiden Hypothesen H1 und H2 verlaufen in dem Wort W zunächst getrennt, bis sie im weiteren Verlauf schließlich durch dieselben Gitterpunkte verlaufen, d.h. bei den letzten Testsignalen ergibt der Vergleich mit denselben Referenzsignalen für beide Hypothesen den optimalen Pfad. Bei i4 erreichen beide Hypothesen H1 und H2 schließlich den letzten Referenzwert R3 des Wortes W, d.h. das Ende dieses Wortes. Dabei werden beide Hypothesen H1 und H2 unabhängig voneinander aufrechterhalten.

Nachdem die beiden Hypothesen H1 und H2 das Ende des Wortes W beim Testsignal i4 erreicht haben, wird für jede der beiden Hypothesen H1 und H2 ein Wortergebnis abgeleitet, wobei das Wortergebnis für die Hypothese H1 den Endpunkt in Form der Angabe des Testsignals i4 oder eines zugehörigen Zeitpunktes, eine Angabe über die Identität des beendeten Wortes, nämlich W, ferner den Startpunkt i3 sowie das zugehörige Vorgängerwort V1 umfaßt. In entsprechender Weise umfaßt das Wortergebnis für die Hypothese H2 ebenfalls die Angabe des Endpunktes i4, des Wortes W, des Startpunktes, in diesem Falle i2, und des zugehörigen Vorgängerwortes V2. Außerdem werden in beiden Wortergebnissen die entsprechenden Bewertungswerte, die über die Hypothesen H1 und H2 am Ende des Wortes W erreicht wurden, im Wortergebnis abgespeichert.

Es sei bemerkt, daß am Ende der Vorgängerwörter V1 und V2 für die Hypothesen H1 und H2 in entsprechender Weise Wortergebnisse abgeleitet und gespeichert wurden, was in diesem Zusammenhang hier jedoch nicht weiter betrachtet wird.

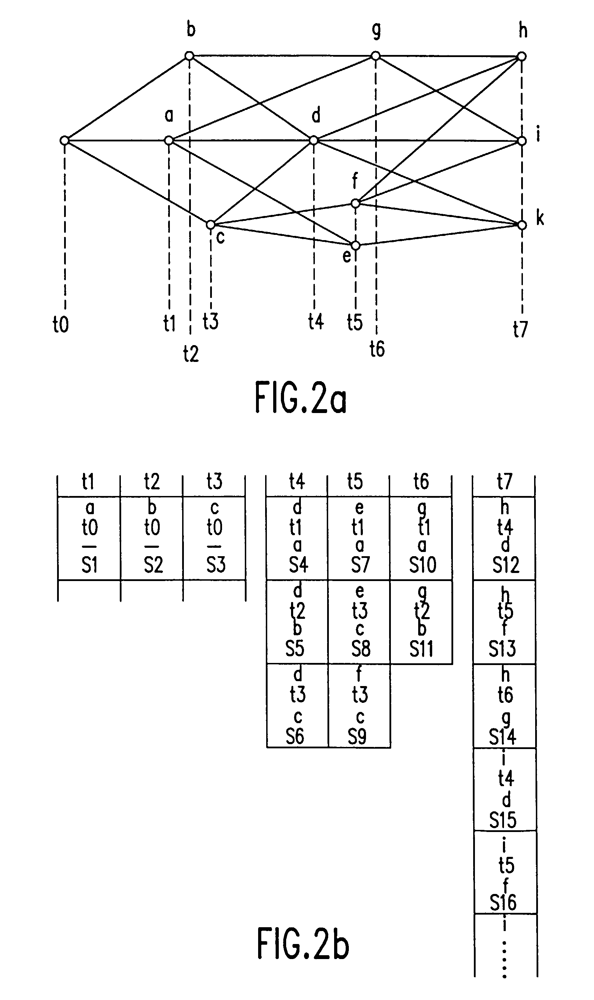

In entsprechender Weise werden weitere Wortergebnisse abgeleitet, wenn zu anderen Zeitpunkten die Enden von anderen Wörtern oder auch des Wortes W erneut erreicht werden, wobei insbesondere bei einem großen Vokabular bei den meisten Zeitpunkten mehrere Wortenden gleichzeitig erreicht werden. Die abgespeicherten Wortergebnisse werden dann als Wortgitter betrachtet, wie in Fig. 2 an einem stark vereinfachten Beispiel angedeutet ist. Dabei stellt Fig. 2a das Wortgitter selbst dar, während Fig. 2b die Inhalte der Speicherstellen für die Wortergebnisse andeuten soll.

Das Sprachsignal, also ein gesprochener Satz, möge zum Zeitpunkt t0 beginnen. In diesem Beispiel ist auf Zeitpunkte anstelle von Testsignalen Bezug genommen, was jedoch grundsätzlich gleichwertig ist.

Zum Zeitpunkt t1 wird das Ende eines Wortes a erreicht, und es wird ein Wortergebnis abgespeichert, wie in Fig. 2b unter t1 angegeben ist, wobei das Wortergebnis gemäß vorhergehender Beschreibung eine Angabe des Endpunktes, des beendeten Wortes, dessen Zeitpunktes und dessen Vorgängerworts umfaßt. Entsprechend wird beim Zeitpunkt t2 das Ende eines Wortes b und beim Zeitpunkt t3 das Ende eines Wortes c erreicht, und die entsprechenden Wortergebnisse, die vorher anhand der Fig. 2 angegeben wurden, werden gespeichert. In allen Fällen ist also der Startpunkt der Wörter der Zeitpunkt t0, es gibt keine Vorgängerwörter, und die Bewertungswerte am Ende dieser Wörter sind S1 bzw. S2 bzw. S3.

Das Wort a wird nun mit drei Wörtern fortgesetzt, und zwar mit den Wörtern d, e und g, d.h. die zum Ende des Wortes a führende Hypothese wird also in drei Hypothesen aufgespalten. In entsprechender Weise wird das Wort b mit den beiden Wörtern d und g fortgesetzt, jedoch nicht mit anderen Wörtern wie das Wort e, weil angenommen wird, daß die von dem Wortende b ausgehenden Hypothesen in diesen Wörtern mit ihrem Bewertungswert den Schwellenwert überschreiten und beendet werden, bevor sie das Ende solcher Wörter erreichen. Das Wort c schließlich wird mit den Wörtern d, e und f fortgesetzt.

Es sei bemerkt, daß hier vereinfacht angenommen ist, daß die Wörter a, b und c bezüglich der Fortsetzungen mit verschiedenen Wörtern d, g usw. je denselben Endpunkt haben, was tatsächlich nicht der Fall sein muß. Andererseits können Endpunkte verschiedener Wörter, in Fig. 2a z.B. t1 und t2, zusammenfallen. Entsprechendes gilt auch für die anderen Wörter.

Das Wort d, das zum Zeitpunkt t4 endet, hat also drei Vorgängerwörter a, b und c, und für jedes dieser Vorgängerwörter wird ein Wortergebnis abgespeichert, wie in Fig. 2b unter t4 angedeutet ist. Die Wörter e und f enden bei demselben Zeitpunkt t5, und die entsprechenden Wortergebnisse werden also alle unter t5 abgespeichert, wobei das Wort e nur zwei Vorgängerwörter und das Wort f nur ein Vorgängerwort hat. Das Wort g, das zum Zeitpunkt t6 endet, hat zwei Vorgängerwörter, nämlich a und b, und die entsprechenden Wortergebnisse sind unter t6 gespeichert.

Zum Zeitpunkt t7 wird das Ende des Sprachsignals erreicht, und dabei wird das Ende von drei Wörtern h, i und k erreicht. Das Wort h hat die drei Vorgängerwörter d, f und g, und jedes Wortergebnis wird unter t7 abgespeichert, wie in Fig. 2b angedeutet ist. Entsprechend hat auch das Wort i die gleichen drei Vorgängerwörter d, g und f, die ebenfalls unter t7 getrennt abgespeichert werden müssen, wie in Fig. 2b nicht vollständig angedeutet ist. Die drei Wortergebnisse für das Wort k sind der Übersichtlichkeit halber in Fig. 2b ganz weggelassen.

Aus dem in Fig. 2a dargestellten Wortgitter ist zu erkennen, daß darin eine große Anzahl Pfade möglich sind, die zu verschiedenen Wortfolgen führen, z.B. die Wortfolgen a-g-i, b-d-h, c-f-k usw.. Diese Wortfolgen können dadurch bestimmt werden, daß von jedem der beim Zeitpunkt t7 endenden Wörter h, i und k über die gespeicherten Anfangspunkte dieser Wörter die Vorgängerwörter und entsprechend deren Vorgängerwörter gefunden werden können. Von diesen vielen Wortfolgen könnte nun diejenige ausgewählt werden, die mit dem unter t7 gespeicherten Wortergebnis endet, das den günstigsten Bewertungswert hat.

Es sei bemerkt, daß die Wörter a bis k nicht alle unterschiedlich sein müssen, sondern z.B. können die Wörter a und f auch gleich sein.

Eine Verbesserung der Zuverlässigkeit der Erkennung kann jedoch erreicht werden, wenn die Wortfolgen mit einem Sprachmodell, insbesondere mit einem Sprachmodell höherer Ordnung, bewertet werden. Bei Verwendung eines Bigram-Sprachmodell wird also am Ende jedes ersten Wortpaares wie dem Wortpaar b-g, b-d, a-g usw. der zugehörige Sprachmodellwert zu dem am Ende des jeweils zweiten Wortes erreichten Bewertungswert addiert, und für jedes der zweiten Wörter d, e, f und g wird dasjenige Vorgängerwort behalten, bei dem die Summe aus Bewertungswert und Sprachmodellwert am kleinsten ist. Beispielsweise kann das Wortpaar b-g einen kleineren Bewertungswert erreicht haben als das Wortpaar a-g, wobei letzteres Wortpaar jedoch einen wesentlich günstigeren Sprachmodellwert haben kann, so daß die Summe aus Sprachmodellwert und Bewertungswert schließlich für das Wortpaar a-g am kleinsten ist.

In gleicher Weise kann für die Wortpaare, bei denen das Wort h bzw. i bzw. k das letzte Wort ist, ein Sprachmodell berücksichtig werden, wobei jedoch bei jedem Vorgängerwort von einem neuen Bewertungswert ausgegangen wird, der aus der Summe des ursprünglichen Bewertungswertes und des Sprachmodellwertes entstanden ist. Für jedes der letzten Wörter h, i und k ergibt sich dann ein neuer Bewertungswert aus dem Bewertungswert für jedes vorhergehende Wortpaar und dem entsprechenden Sprachmodellwert, so daß für jedes der Wörter h, i und k nur ein einzelner Pfad zum Anfang beim Zeitpunkt t0 übrig bleibt. Von diesen Pfaden bzw. Wortfolgen wird diejenige ausgewählt, die bei dem letzten Wort h bzw. i bw. k den günstigsten Bewertungswert erreicht hat.

In entsprechender Weise kann auch ein Trigram-Sprachmodell verwendet werden, wobei nur wenig mehr Rechenaufwand erforderlich ist, da der weitaus größte Rechenaufwand für die Ermittlung der Hypothesen in den Wörtern und damit für die Erzeugung des Wortgitters entsprechend der Fig. 2a erforderlich ist.

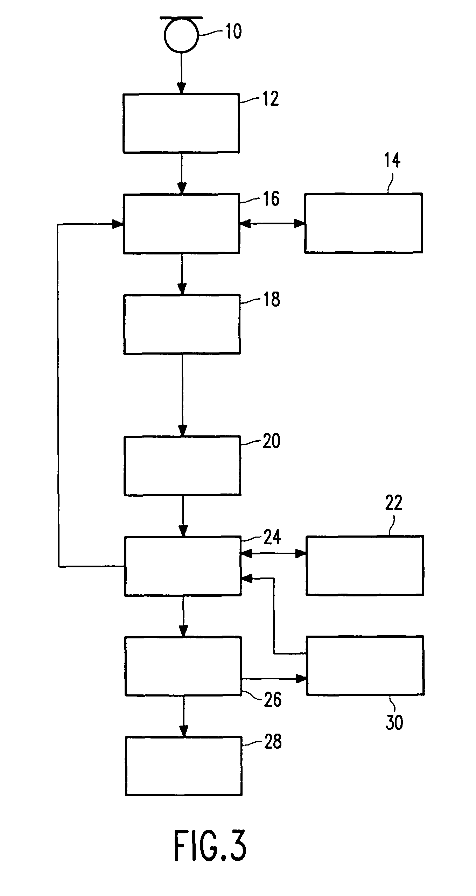

In Fig. 3 ist ein schematisches Blockschaltbild einer Anordnung zum Ermitteln einer Folge von Wörtern aus einem Sprachsignal dargestellt. Das Sprachsignal wird über ein Mikrofon 10 aufgenommen und in ein elektrisches Signal umgesetzt. Dieses Mikrofon kann eine Einheit mit der übrigen Anordnung bilden. Es kann jedoch auch weit entfernt aufgestellt sein, wobei die Verbindung zwischen dem Mikrofon und der übrigen Anordnung durch eine Telefonleitung gebildet werden kann.

Das vom Mikrofon 10 gelieferte elektrische Signal wird, wenn es ein analoges Signal ist, in einer Einheit 12 in bekannter Weise durch periodische Abtastung in ein digitales Signal umgesetzt, aus dem zu wiederholten Zeitpunkten Testsignale gebildet werden. Diese Testsignale geben beispielsweise die Energie des Sprachsignals in bestimmten Frequenzbereichen für vorbestimmte Zeitabschnitte von beispielsweise 10 ms Dauer des Sprachsignals an.

Diese Testsignale werden einer Einheit 16 zugeführt und darin mit Referenzsignalen verglichen, die in einem Speicher 14 gespeichert sind. Die Referenzsignale können vorher aus vorgegebenen Testsätzen ermittelt worden und fest gespeichert sein, es ist jedoch auch möglich, diese Referenzsignale aus den Ergebnissen bei der Ermittlung der Folge von Wörtern zu verändern und zu ergänzen. Derartige Maßnahmen sind grundsätzlich bekannt und stellen keinen Teil der Erfindung dar und werden daher nicht weiter erläutert.

Bei dem Vergleich im Block 16 werden u.a. Bewertungswerte erzeugt, die ein Maß dafür darstellen, wie eine Folge von Testsignalen mit verschiedenen Folgen von im Speicher 14 gespeicherten Referenzsignalen übereinstimmt. Dies geschieht auf bekannte Weise mit Methoden der dynamischen Programmierung. Während der Bildung der Bewertungswerte erfolgt außerdem ein Vergleich mit wenigstens einem Schwellwert, bei dessen Überschreiten der weitere Vergleich für die betreffende Folge von Referenzsignalen abgebrochen wird. Außerdem erfolgt bei dem Vergleich eine Art Buchführung über die Vorgeschichte, d.h. insbesondere den Anfangspunkt des Vergleichs für eine Folge von Referenzsignalen und wenigstens eines vorhergehenden Wortes.

Die Folgen der Referenzsignale im Speicher 14 stellen Wörter eines vorgegebenen Vokabulars dar, und wenn das Ende einer solchen Folge und damit ein Wortende beim Vergleich erreicht wird, wird ein Wortergebnis abgeleitet. Dies erfolgt in der Einheit 18. Jedes Wortergebnis umfaßt dabei wenigstens diejenigen Angaben, die anhand der Fig. 2b erläutert wurden. Mit der Ermittlung der Wortergebnisse wird die erste Ebene der Erkennung, die auch als akustische Ebene bezeichnet wird, verlassen, und die Wortergebnisse werden in einem Speicher 20 gespeichert.

In der Einheit 24 werden die Wortergebnisse mit den Werten eines Sprachmodells verarbeitet, die in einem Speicher 22 gespeichert sind. Wie früher beschrieben, werden die Bewertungswerte der einzelnen Wortergebnisse um Werte entsprechend dem Sprachmodell erhöht. Die erhöhten Bewertungswerte werden einerseits der Einheit 16 wieder zugeführt, damit die Fortsetzung des Vergleichs der folgenden Testsignale mit Anfängen von Folgen von Referenzsignalen unter Berücksichtigung des Sprachmodells erfolgen kann.

Die ergänzten Wortergebnisse werden einer Einheit 26 zugeführt, in der anhand der Bewertungswerte in den Wortergebnissen eine optimale Wortfolge ausgewählt werden kann. Dies kann am Ende eines Satzes geschehen, jedoch ist es auch möglich, in regelmäßigen Zeitabschnitten eine Teilwortfolge auszugeben, die gegenüber dem momentanen Stand um beispielsweise eine Anzahl Wörter nacheilt, da angenommen werden kann, daß bis zu einem gewissen Punkt vor dem momentanen Augenblick die optimale Wortfolge feststeht. Die endgültige Wortfolge würde dann also abschnittsweise an einer Ausgabeanordnung 28, beispielsweise einem Drucker oder einem Bildschirm, ausgegeben werden.

Dabei ist es auch möglich, daß bei Ausgabe auf einem Bildschirm ein Fehler von einer Bedienungsperson erkannt wird, d.h. ein nicht richtig erkanntes Wort, und die Bedienungsperson kann dann dieses Wort löschen und die Anzahl der optimalen Wortfolge erneut starten. Dies wird häufig auf einen anderen Pfad durch das Wortgitter führen, auf dem anstelle des gelöschten Worts ein ähnliches Wort erscheint. Falls dies immer noch falsch sein sollte, kann der Vorgang wiederholt werden. Dies ist durch die Einheit 30 angedeutet. Auf diese Weise ist eine besonders günstige interaktive Verarbeitung des Sprachsignals und praktisch fehlerfreie Ermittlung der richtigen Wortfolge daraus möglich.

Es sei bemerkt, daß einige oder alle Einheiten auch durch einen entsprechend programmierten Computer realisiert werden können. Dabei wird es allgemein zweckmäßig sein, wenigstens einige der Speicher in den Hauptspeicher des Computers aufzunehmen.

## Patentansprüche

1. Verfahren zum Ermitteln einer Folge von Wörtern eines vorgegebenen Vokabulars aus einem Sprachsignal mit folgenden Schritten:
- zu wiederholten Zeitpunkten wird das Sprachsignal abgetastet, um eine Folge von Testsignalen zu erzeugen;
- ein Wortgitter wird gebildet, indem nach der Methode der dynamischen Programmierung auf der akustischen Ebene ein Vergleich zwischen den Testsignalen und verschiedenen Folgen von Referenzsignalen zur Bildung von Wortfolgenhypothesen durchgeführt wird, wobei einem Wortende jeweils mindestens ein Wortergebnis zugeordnet wird, das zumindest einen Hinweis auf ein zugehöriges Vorgängerwort und einen Bewertungswert enthält, der durch einen zugehörigen Sprachmodellwert erhöht wird;
- auf der Grundlage eines so gebildeten Wortgitters und der um Sprachmodellwerte erhöhten Bewertungswerte wird eine optimale Wortfolge ausgewählt.

2. Verfahren nach Anspruch 1,
dadurch gekennzeichnet,
daß zum Ermitteln einer Folge von Wörtern eines vorgegebenen Vokabulars aus einem Sprachsignal folgende Schritte durchgeführt werden:
zu wiederholten Zeitpunkten wird das Sprachsignal abgetastet, um eine Folge von Testsignalen zu erzeugen;
es wird ein signalweiser Vergleich zwischen den Testsignalen und verschiedenen Folgen von Referenzsignalen mit Erzeugung von Bewertungswerten durchgeführt, wobei jede Folge von Referenzsignalen ein Wort des Vokabulars darstellt;
bei Erreichen des Endes jeder Folge von Referenzsignalen entsprechend dem Ende eines Wortes bei einem ersten Testsignal wird für jeden unterschiedlichen Anfang dieses Wortes ein gesondertes Wortergebnis abgeleitet, das einen Hinweis auf das beendete Wort, einen Hinweis auf das erste Testsignal als Wortende, einen Hinweis auf den Wortanfang,
einen Hinweis auf das diesem Wortanfang vorausgegangene Vorgängerwort und einen Hinweis auf den Bewertungswert für das beendete Wort vom Wortanfang bis zum Wortende umfaßt, und dieses Wortergebnis wird gespeichert;
nach jedem Wortende wird der Vergleich mit dem Anfang von Folgen von Referenzsignalen für jedes gleichzeitig endende Wort getrennt neu begonnen;
für jedes erste Testsignal wird aus den gespeicherten Wortergebnissen für jedes Wort ein optimales Vorgängerwort ermittelt, bei dem das Wortergebnis unter Berücksichtigung eines Sprachmodellwerts, der abhängig vom verwendeten Sprachmodell von dem Wort, dem optimalen Vorgängerwort und von diesem vorangehenden optimalen Vorgängerwörtern abhängt, den kleinsten Bewertungswert gegenüber allen anderen Vorgängerwörtern für dasselbe Wort erreicht;
aus dem günstigsten Bewertungswert und dem zugehörigen Wort am Ende eines vorgegebenen Abschnitts des Sprachsignals wird über die gespeicherten Hinweise auf die Startpunkte vorhergehender Wörter eine Folge von Wörtern ermittelt und abgegeben.

3. Anordnung zum Ermitteln einer Folge von Wörtern eines vorgegebenen Vokabulars aus einem Sprachsignal mit
- Mitteln (12) zur Abtastung des Sprachsignals zu wiederholten Zeitpunkten, um eine Folge von Testsignalen zu erzeugen;
- Mitteln (16, 18, 20, 22, 24) zur Bildung eines Wortgitters, wobei nach der Methode der dynamischen Programmierung auf der akustischen Ebene ein Vergleich zwischen den Testsignalen und verschiedenen Folgen von Referenzsignalen zur Bildung von Wortfolgenhypothesen durchgeführt wird und wobei einem Wortende jeweils ein Wortergebnis zugeordnet wird, das zumindest einen Hinweis auf ein zugehöriges Vorgängerwort und einen Bewertungswert enthält, der durch einen zugehörigen Sprachmodellwert erhöht wird;
- Mitteln (26) zur Auswahl einer optimalen Wortfolge auf der Grundlage eines so gebildeten Wortgitters und der um Sprachmodellwerte erhöhten Bewertungswerte.

## Claims

1. A method of recognizing a sequence of words of a predetermined vocabulary from a speech signal, which method includes the following steps:
• sampling the speech signal at recurrent instants in order to produce a series of test signals;
• forming a word grid by executing, at the acoustic level and by means of the dynamic programming method, a comparison between the test signals and various series of reference signals in order to form word sequence hypotheses, each time at least one word result being associated with a word end, which result includes at least a reference to an associated predecessor word and a score which is incremented by an associated language model value;
• selecting an optimum word sequence on the basis of a word grid thus formed and the scores incremented by language model values.

2. A method as claimed in Claim 1, characterized in that the following steps are carried out in order to recognize a sequence of words of a predetermined vocabulary from a speech signal:
sampling the speech signal at recurrent instant in order to produce a series of test signals; executing a signal-by-signal comparison between the test signals and various series of reference signals, thus producing scores, each series of reference signals representing a word of the vocabulary;
deriving, whenever the end of a series of reference signals corresponding to the end of a word with a first test signal is reached, a separate word result for each different start of this word, which word result includes a reference to the terminated word, a reference to the first test signal as the word end, a reference to the word beginning, a reference to the predecessor word preceding the relevant word beginning, and a reference to the score for the terminated word from the word beginning until the word end, said word result being stored;
separately starting, after each word end the comparison with the beginning of series of reference signals anew for each simultaneously terminating word;
determining, for each first test signal, an optimum predecessor word for each word from the word results stored, the word result reaching, taking into account a language model value which, in dependence on the language model used, is dependent on the word, the optimum predecessor word and the optimum predecessor words thereof, the smallest score in comparison with all other predecessor words for the same word;
determining and delivering a sequence of words from the best score and the associated word at the end of a predetermined segment of the speech signal, via the stored references to the starting points of preceding words.

3. A device for determining a sequence of words of a given vocabulary from a speech signal, including
• means (12) for sampling the speech signal at recurrent instants in order to produce a series of test signals;
• means (16, 18, 20, 22, 24) for forming a word grid wherein, at the acoustic level and by means of the dynamic programming method, a comparison is performed between the test signals and various series of reference signals in order to form word sequence hypotheses and wherein with a word end there is associated a respective word result which includes at least a reference to an associated predecessor word and a score which is incremented by an associated language model value;
• means (26) for selecting an optimum word sequence on the basis of a word grid thus formed and the scores increased by language model values.

## Revendications

1. Procédé de détermination d'une séquence de mots d'un vocabulaire préalablement déterminé à partir d'un signal de parole avec les étapes suivantes :
- à intervalles répétés, le signal de parole est balayé pour produire une séquence de signaux de test ;
- une grille de mots est formée en procédant selon la méthode de la programmation dynamique au niveau acoustique à une comparaison entre les signaux de test et différentes séquences des signaux de référence en vue de la formation d'hypothèses de séquences de mots, au moins un résultat de mot étant affecté respectivement à une fin de mot, lequel contient au moins une indication sur un mot précédent correspondant et une valeur d'évaluation qui est majorée par une valeur de modèle de parole correspondante ;
- sur la base d'une grille de mots ainsi formée et des valeurs d'évaluation majorées des valeurs du modèle de parole, une séquence de mots optimale est sélectionnée.

2. Procédé selon la revendication 1,
caractérisé en ce
que les étapes suivantes sont exécutées en vue de la détermination d'une séquence de mots d'un vocabulaire préalablement déterminé à partir d'un signal de parole :
- à intervalles répétés, le signal de parole est balayé pour produire une séquence de signaux de test ;
- une comparaison, signal par signal, entre les signaux de test et différentes séquences de signaux de référence est effectuée avec la production de valeurs d'évaluation, chaque séquence de signaux de référence représentant un mot du vocabulaire ;
- lorsque la fin de chaque séquence des signaux de référence est atteinte en fonction de la fin d'un mot pour un premier signal de test, un résultat de mot séparé qui donne une indication sur le mot terminé, une indication sur le premier signal de test comme fin de mot, une indication sur le début du mot, une indication sur le mot précédent précédant ce début de mot, une indication sur la valeur d'évaluation pour le mot terminé du début du mot jusqu'à la fin du mot est dérivée pour chaque début différent de ce mot et ce résultat de mot est enregistré ;
- après chaque fin de mot, la comparaison recommence séparément avec le début de séquences de signaux de référence pour chaque mot se terminant simultanément ;
- pour chaque premier signal de test, un mot précédent optimal est déterminé à partir des résultats de mot enregistrés pour chaque mot, le résultat de mot atteignant la plus petite valeur d'évaluation par rapport à tous les autres mots précédents pour le même mot en prenant en considération une valeur du modèle de parole qui, en fonction du modèle de parole utilisé, dépend du mot, du mot précédent optimal et des mots précédents optimaux précédant celui-ci ;
- à partir de la valeur d'évaluation la plus avantageuse et du mot correspondant à la fin d'un segment préalablement déterminé du signal de parole, une séquence de mots est déterminée et délivrée par l'intermédiaire des indications enregistrées sur les points de départ des mots précédents.

3. Dispositif de détermination d'une séquence de mots d'un vocabulaire préalablement déterminé à partir d'un signal de parole avec
- des moyens (12) en vue de la lecture du signal de parole à intervalles répétés pour produire une séquence de signaux de test ;
- des moyens (16, 18, 20, 22, 24) en vue de la formation d'une grille de mots, une comparaison entre les signaux de test et différentes séquences des signaux de référence en vue de la formation d'hypothèses de séquences de mots étant effectuée selon la méthode de la programmation dynamique au niveau acoustique et un résultat de mots étant respectivement affecté à une fin de mot lequel contient au moins une indication sur un mot précédent correspondant et une valeur d'évaluation qui est majorée par une valeur de modèle de parole correspondante ;
- des moyens (26) en vue de la sélection d'une séquence de mots optimale sur la base d'une grille de mots ainsi formée et des valeurs d'évaluation majorées de valeurs du modèle de parole.
